# EUROPEAN PATENT SPECIFICATION

(11) **EP 0 490 241 B1**
(45) Date of publication and mention of the grant of the patent: **14.06.1995**
(21) Application number: 91120775.1
(22) Date of filing: 03.12.1991
(51) Int. Cl.: B41J 11/36

(54) **Passbook or the like handling apparatus**
Gerät zur Handhabung eines Konto- oder ähnlichen Buches
Appareil pour le traitement de livres de comptes ou de livres semblables

(30) Priority: 06.12.1990 JP 400552/90; 29.10.1991 JP 282768/91
(43) Date of publication of application: 17.06.1992
(73) Proprietor: HITACHI, LTD., Chiyoda-ku, Tokyo 101 (JP)
(72) Inventor: Inoue, Masashi, Aichi-ken, 489 (JP); Fujimoto, Nobuo, Seto-shi (JP); Baba, Kimio, Motosu-gun, Gifu-ken (JP)
(74) Representative: Beetz & Partner Patentanwälte

(56) References cited:
- GB-A- 2 035 218
- PATENT ABSTRACTS OF JAPAN vol. 11, no. 225 (M-609),1987; JP-A-62041074 (MATSUSHITA ELECTRIC)
- PATENT ABSTRACTS OF JAPAN vol. 15, no. 81 (M-1086),1991; JP-A-2301462 (SANKYO K.K.)

## Description

### BACKGROUND OF THE INVENTION

The present invention relates to a passbook or the like handling apparatus, and more particularly to an apparatus which detects a first nonprinted line, which is a line where contents of following transaction are to be printed, with certainty in a passbook or the like.

In an apparatus of this type connected with a host computer in which all the contents of past transactions are preserved, the position of a first nonprinted line can be specified easily from data stored in the host computer. Thus, a passbook handling apparatus which becomes an object of the present invention is such a type of apparatus that those data are not stored, but the first nonprinted line is detected every time an account is kept with a bank or a passbook or the like is inserted into the apparatus and unentered contents of the transaction are printed therefrom.

In a conventional apparatus of this type, a first line of nonprinted lines has been retrieved by scanning in a vertical direction with respect to printed lines of a passbook or the like using a single optical sensor.

JP-A-2-235780 may be mentioned as a citation showing an apparatus having such a structure.

Further, techniques for having an optical sensor perform scanning for the purpose of reading bar codes have been disclosed in JP-A-62-46037.

### SUMMARY OF THE INVENTION

It is an object of the present invention to provide a passbook or the like handling apparatus which detects a first nonprinted line with certainty.

It is another object of the present invention to provide a passbook or the like handling apparatus which detects a first nonprinted line at a high speed and with certainty.

It is still another object of the present invention to provide the apparatus described above while restraining increase in number of components as small as possible, in other words, at a low manufacturing cost.

According to the present invention, such a configuration is assumed in order to achieve at least one of above-described objects. First, a sensor is made to scan in a direction perpendicular to printed lines. With this, the first nonprinted line can be specified tentatively, but the certainty thereof is the same as that of prior art. In the present invention, after a first nonprinted line is determined temporarily by scanning in the perpendicular direction, the sensor is made to scan in a printing direction, i.e., in a horizontal direction with respect to that line in order to increase the certainty. Furthermore, the sensor is made to scan that line and lines above and under that line.

Since the sensor is made to scan in two directions described above, there is a possibility of decrease in the speed of detecting the first nonprinted line. Accordingly, reduction in detection speed is prevented in the present invention by performing scanning in the horizontal direction in a special sequence.

Further, in the present invention, an exclusive driver for moving the sensor is omitted by installing the sensor on a printing head which moves evidently both in a horizontal direction and in a perpendicular direction with respect to the printed lines.

### BRIEF DESCRIPTION OF THE DRAWINGS

Fig. 1 is a sectional view for explaining a configuration of an embodiment of an apparatus according to the present invention;
Fig. 2 is a sectional view of a portion taken along a line II-II in Fig. 1;
Fig. 3 is an explanatory diagram of a configuration of an apparatus of an embodiment;
Fig. 4 is an explanatory view showing positions and directions of scanning with respect to a passbook;
Fig. 5 is a flow chart for explaining one operation of an apparatus shown in Figs. 2 and 3;
Fig. 6 is a flow chart for explaining another operation of the apparatus shown in Figs. 2 and 3;
Fig. 7 is a flow chart for explaining still another operation of the apparatus shown in Figs. 2 and 3; and
Figs. 8A and 8B are flow charts for explaining another operation of the apparatus shown in Figs. 2 and 3.

### DESCRIPTION OF THE PREFERRED EMBODIMENTS

The present invention will be described in more detail hereinafter with reference to embodiments shown in the accompanying drawings.

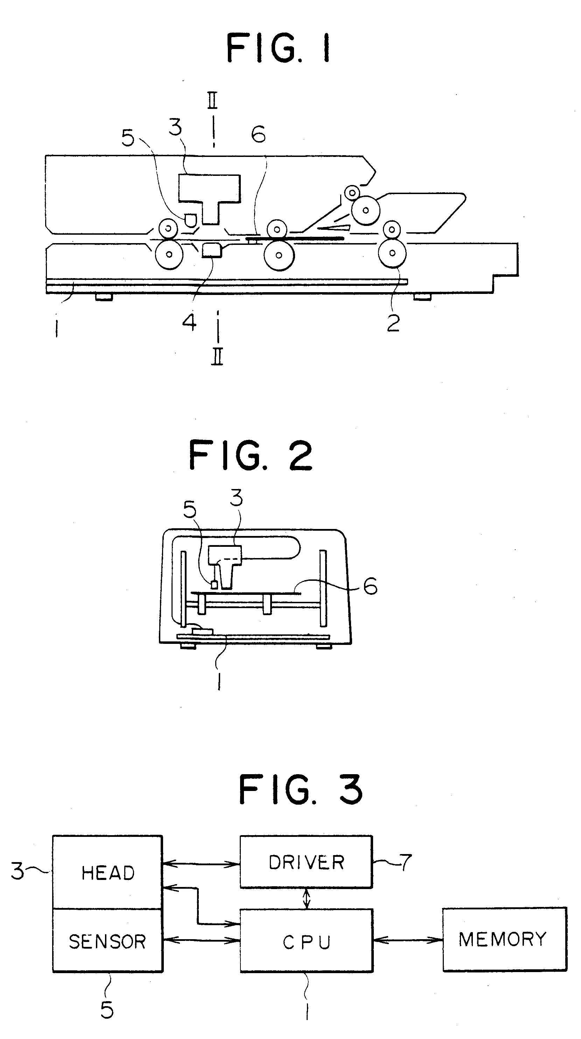

Fig. 1 is a sectional view showing an embodiment of a passbook handling apparatus according to the present invention, Fig. 2 is a sectional view of a portion taken along a line II-II of the embodiment shown in Fig. 1, and Fig. 3 is an explanatory diagram for explaining the configuration thereof.

As shown in Fig. 1 and Fig. 2, the passbook handling apparatus of the embodiment comprises a control section 1, conveyance rollers 2 which convey a passbook 6, a printing head 3 for printing on the passbook 6, a platen 4 and an optical sensor 5 for detecting printed lines. A reference numeral 7 denotes a driver of the printing head 3. Here, the optical sensor 5 is installed on a carrier (not shown) coupled with the printing head 3. Further, the optical sensor 5 is connected with the control section 1 through a cable. In the embodiment shown in Fig. 1 and Fig. 2, retrieval in a direction perpendicular to printed lines is performed by conveying the passbook 6 by means of conveyance roller 2 in a state that the printing head 3 has been brought to a standstill at a predetermined position. Further, by moving the printing head 3 in a state that the passbook 6 has been brought to a standstill at a predetermined position, the optical sensor 5 provided on a carrier which is movable synchronously with the printing head 3 moves in the horizontal direction with respect to the printed line, thus performing retrieval in the horizontal direction with respect to the printed line.

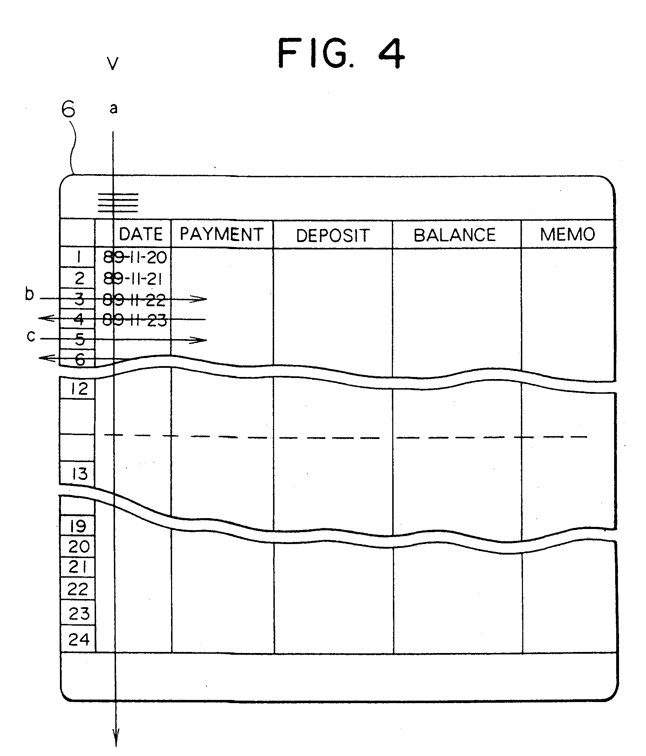

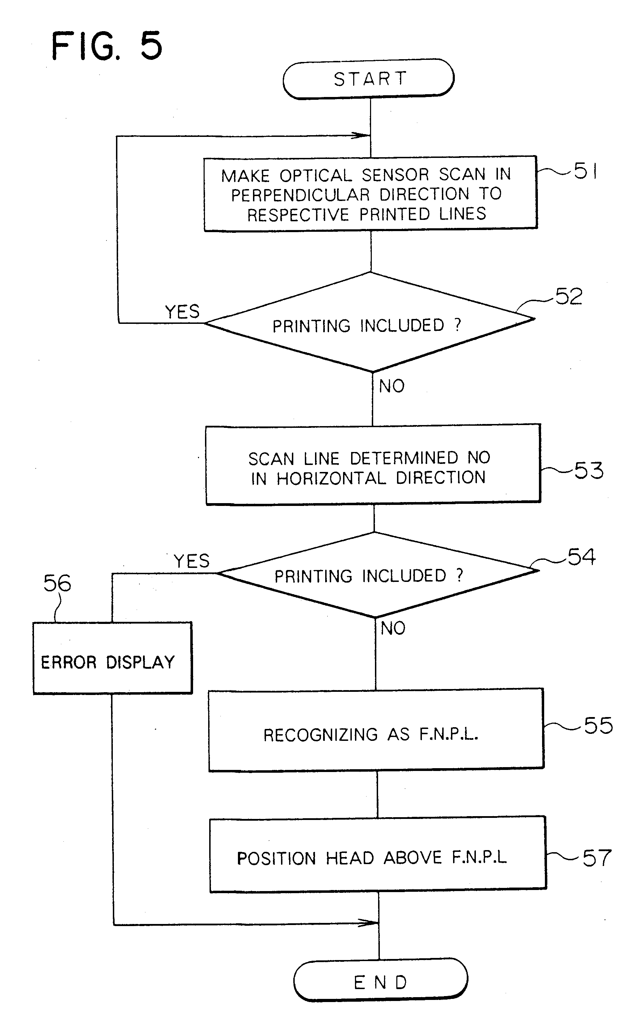

Retrieval in a perpendicular direction and retrieval in a horizontal direction with respect to the passbook 6 will be described in more detail with reference to Fig. 4 and Fig. 5. When the passbook 6 is inserted into the passbook handling apparatus, the optical sensor 5 is positioned at a position of a date column of the passbook 6 in the first place. Then, the optical sensor 5 scans in a direction shown with an arrow mark a, i.e., in a direciton perpendicular to the printed lines with the rotation of the conveyance rollers 2. The control section 1 determines whether the data column of the relevant line has been printed or not with the output data of the optical sensor 5 at that time. It is assumed that it has been retrieved with the foregoing that printing has been made up to the fourth line and the fifth line and thereafter are nonprinted lines.

In the next place, the printing head 3 is moved in a horizontal direction (a direction shown with an arrow mark b or c) for scanning in a state that the printing head 3 is positioned at the fifth line (i.e., in a state that the optical sensor 5 in positioned at the fifth line). With this, the control section 1 determines whether the fifth line is a printed line or not.

Fig. 4 is a flow chart showing above-described operation. Namely, the sensor 5 is made to scan relatively in a perpendicular direction with respect to printed lines in a step 51, thereby to determine whether printing has been made or not in every line (step 52). With this, scanning is performed with respect to a certain page of the passbook from an upper edge thereof in due succession, i.e., from the top to the bottom of that page in order. Then, when a line including no printing (a first nonprinted line) is detected, that line is scanned in a horizontal direction (step 53). When the line includes some printings, error indication is made on a display not shown so as to solicit a user to go over to the window (steps 54 and 56). In case no printing is included in the line, the line is confirmed and recognized as the first nonprinted line (F.N.P.L., step 55).

Then, the printing head 3 is positioned above the first nonprinted line (step 57). In this case, however, the printing head 3 is located above that line (the fifth line) from the first. Therefore, the head 3 is only to be moved to the left end of that line by driving the driver 7. All of above-described operation is executed by a CPU 1 based on a program stored in a memory.

In the above description, the first nonprinted line has been retrieved by scanning in a perpendicular direction, and scanning has been performed next in a horizontal direction with respect to the retrieved nonprinted line so as to confirm that the relevant line is surely a nonprinted line. However, the present invention is not limited thereto, but it may also be arranged, for example, so that scanning in a horizontal direction is performed with respect to the first nonprinted line retrieved by scanning in a perpendicular direction and a plurality of lines above and under the first nonprinted line so as to retrieve printed lines.

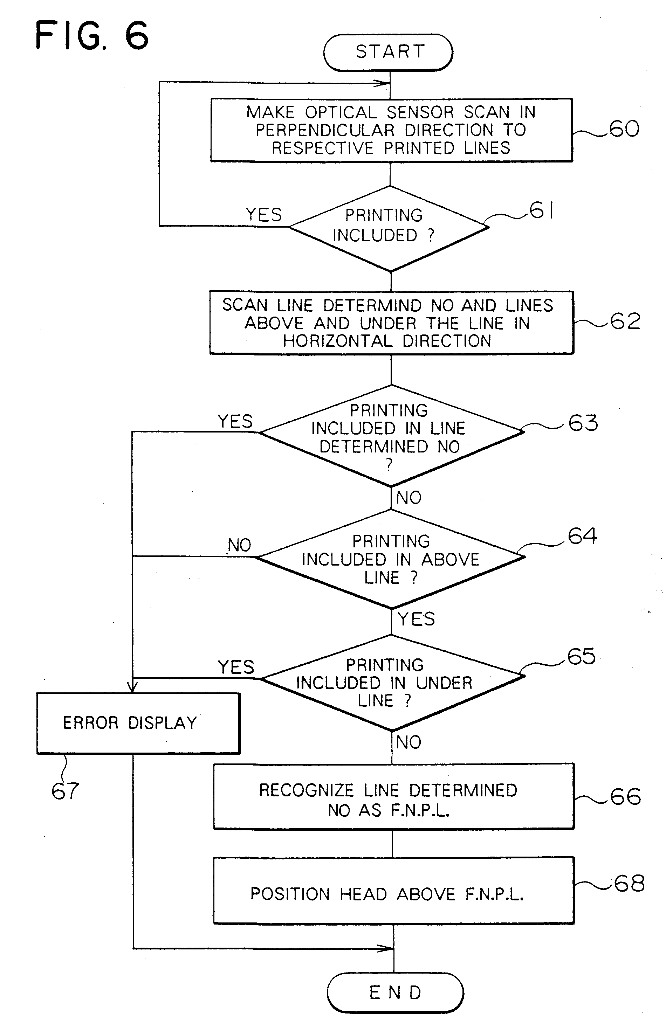

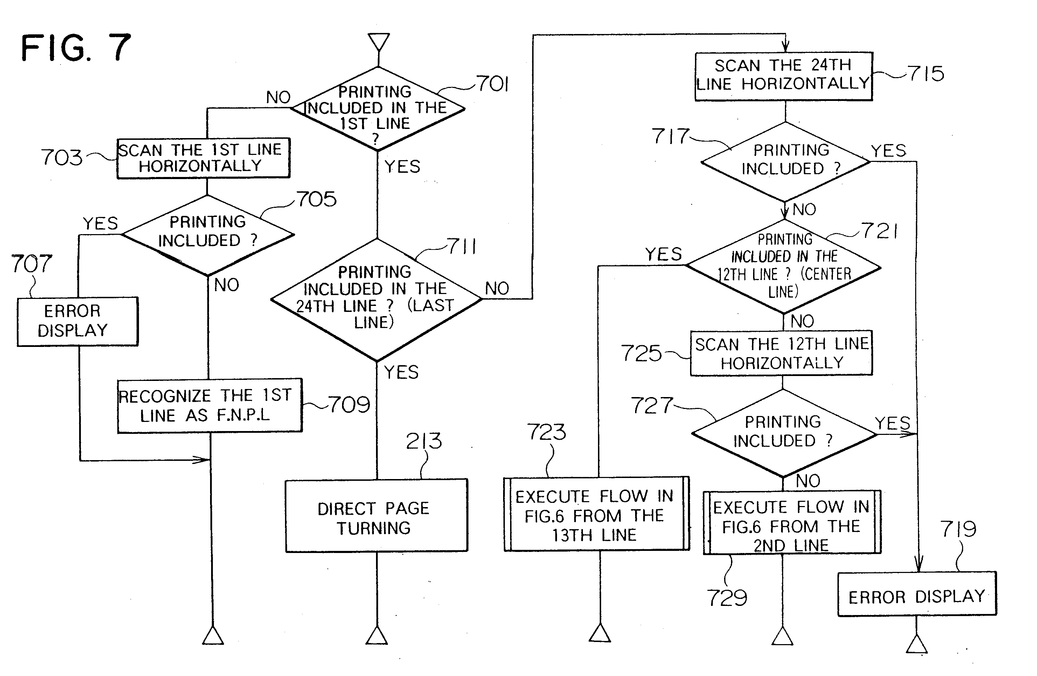

Fig. 6 is a flow chart showing an example in which printed lines are retrieved by means of above-described scanning in the horizontal direction over a plurality of lines. Steps 60 and 61 in this flow chart are substantially equal to the flow chart shown in Fig. 5. In a step 62, to say nothing of the line determined to be NO (a line recognized tentatively as a first nonprinted line), lines above and under that line are scanned in the horizontal direction. Then, only when no printing is included in the line determined to be NO and the line thereunder and printing is included in a line thereabove, the line determined to be NO is confirmed as the first nonprinted line (steps 63 to 66). In other cases, error indication is shown (step 67). In a step 68, the printing head 63 is positioned above the first nonprinted line which has been confirmed in the step 66.

When scanning is executed as shown in Fig. 6, the first nonprinted line can be detected more surely.

Fig. 7 shows another sequence of scanning. In a step 701, it is determined first whether printing has been made in the data column in the first line or not. In case no printing has been made, the first line is scanned in the horizontal direction (step 703). When printing is detected, error indication is shown (steps 705 and 707), and when no printing is detected, the first line is confirmed as the first nonprinted line (step 709). Besides, since the printing head 3 is located above the first line at that time, printing can be executed as it stands.

When it is determined in the step 701 that no printing has been made in the first line, the sensor is moved perpendicularly up to the 24th line so as to determine in a step 711 whether printing has been made therein or not. When printing is detected, page turning is directed (step 213). When no printing is detected, the 24th line is scanned in the horizontal direction for the purpose of confirmation (step 715). When printing is detected there, error indication is shown (steps 717 and 719). If it is confirmed that no printing has been made, the processing is shifted to a step 721.

In the step 721, it is detected whether printing has been made in the 12th line (the central line) or not. When printing has been made, the flow chart shown in Fig. 6 is executed from the 13th line in a step 723. In case no printing is detected in the step 721, the 12th line is scanned in the horizontal direction for the sake of confirmation (step 725). When printing is detected there, error indication is shown (steps 727 and 719). If it is confirmed that no printing is included, the flow chart shown in Fig. 6 is executed from the second line in a step 729.

According to the flow chart shown in Fig. 7, determination of existence of a printed line in the relevant page, the fact that up to which line in the relevant page have been printed and so on can be made quickly by having the optical sensor 5 scan only in the horizontal direction in such a selective sequence that the first line, the 24th line (the last line), the 12th line and the 13th line with respect to printed lines in the passbook 6. Besides, the flow chart shown in Fig.7 shows how to retrieve printed lines (the first nonprinted line). However, by retrieving whether the relevant page includes a printed line (or a nonprinted line) or not for instance, it is also possible to check if the passbook has been inserted into the passbook or the like handling apparatus with a wrong page opened instead of inserting it to the passbook or the like handling apparatus with a page corresponding to the transaction opened. In this case, it is a matter of course that the operation can be realized in steps of procedures which are simpler than those in the flow chart shown.

Further, scanning in both the perpendicular direction and the horizontal direction has been performed with a single optical sensor in the above-described embodiment, but it is needless to say that scanning may be performed by using two optical sensors.

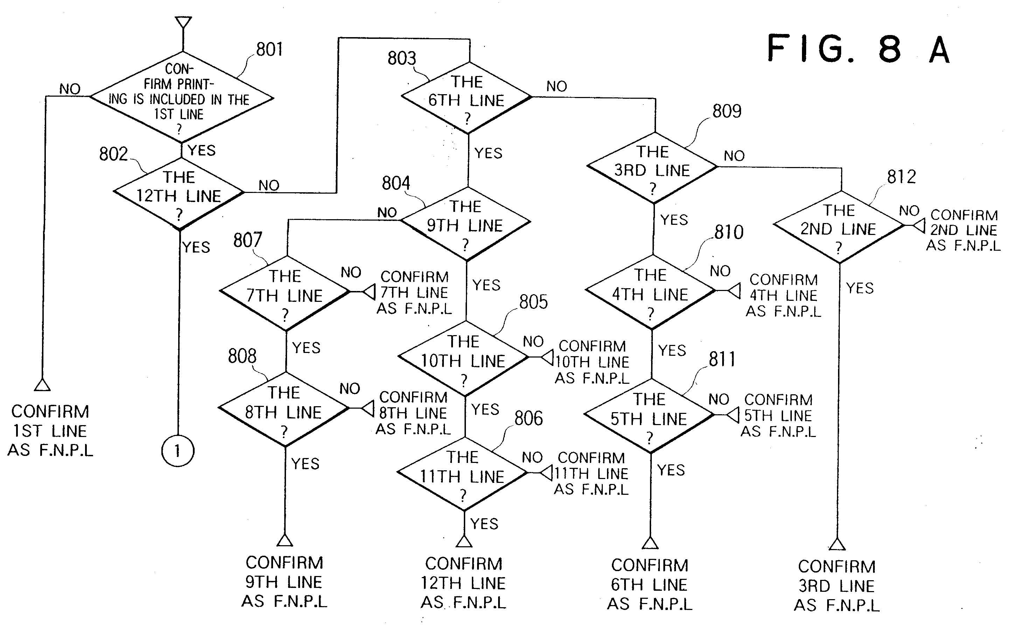

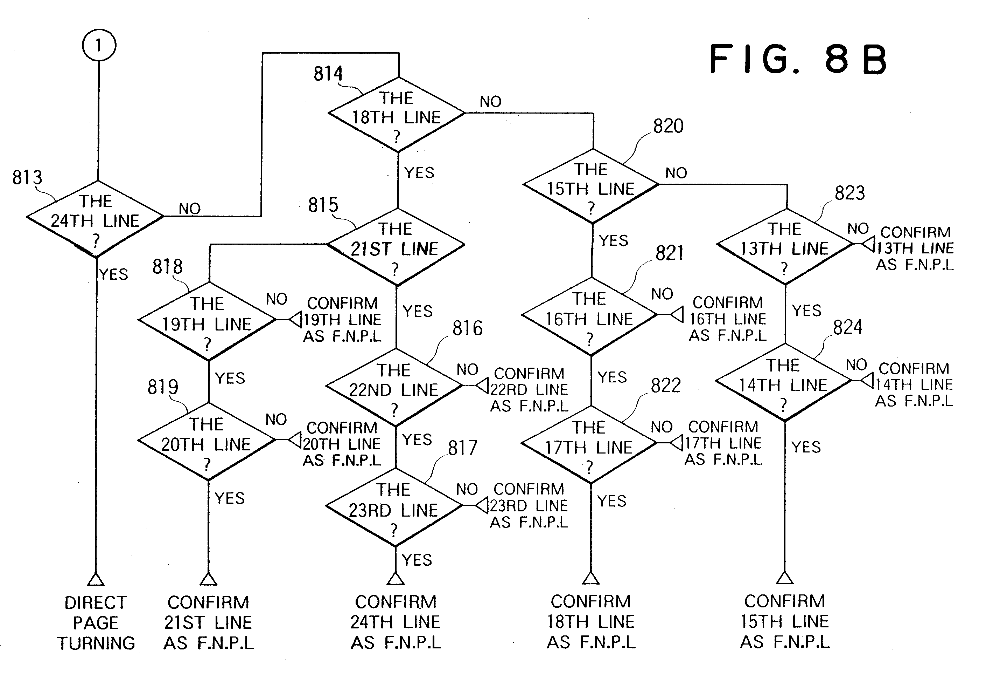

Figs. 8A and 8B show another embodiment of the sequence of scanning.

In the present embodiment, it is confirmed whether the first line includes printing or not in a step 801. The confirmation is similar to the case shown in Fig. 7. First, the sensor is made to scan in a perpendicular direction, and to scan in a horizontal direction for confirmation when no printing is included. If no printing is recognized when scanning is made in the perpendicular direction and existence of printing is recognized in the horizontal direction, error indication is shown. In these figures, a first nonprinted line is referred to as a F.N.P.L.

Detection and confirmation operation similar to that in the step 801 is performed thereafter in respective steps 802 to 824 shown in Figs. 8A and 8B. Besides, scanning in the horizontal direciton which is performed for confirmation of printing in respective steps is performed with respect to a line which becomes the object and lines above and under the objective line.

Although the present invention has been described in detail, it should be understood that various changes, substitutions and alterations can be made hereto without departing from the scope of the present invention as defined by the appended claims.

## Claims

1. A passbook or the like handling apparatus for handling a passbook or the like in which contents of transactions are printed line by line in order from an upper edge thereof downward, comprising:
a first sensor (5) for scanning a passbook or the like (6) in a direction perpendicular to printed lines thereof so as to detect whether printing is included therein or not; characterised by
a second sensor (5) for scanning the passbook or the like (6) in a direciton horizontal to the printed lines so as to detect whether printing is included therein or not; and
means (1) for specifying a first nonprinted line based on the result of detection by said first and second sensors (5).

2. A passbook or the like handling apparatus according to Claim 1, further comprising a scanning control means (1) for having said first sensor (5) perform scanning in the first place, detecting whether printing is included in a locus of scanning, and then having the second sensor (5) perform scanning.

3. A passbook or the like handling apparatus according to Claim 2, wherein said scanning control means (1) controls so that:
said first sensor (5) performs scanning in order of printing from the uppermost printed line, i.e., in order from the top to the bottom of the passbook or the like; and
said second sensor (5) performs scanning of the first nonprinted line detected by said first sensor (5) in a printing direction, i.e., in a horizontal direction.

4. A passbook or the like handling apparatus according to Claim 2, wherein said scanning control means (1) controls so that:
said first sensor (5) performs scanning in order of printing from the first printed line, i.e., in order from the top to the bottom of the passbook or the like (6); and
said second sensor (5) performs scanning of the first nonprinted line detected by said first sensor (5) and lines above and under that line in a horizontal direction.

5. A passbook or the like handling apparatus according to Claim 4, wherein said scanning control means (1) controls so that said first sensor (5) scans the edges of said printed lines.

6. A passbook or the like handling apparatus according to Claim 5, wherein date data are printed at the edges of said printed lines.

7. A passbook or the like handling apparatus according to Claim 2, wherein said scanning control means (1) controls so that said first sensor (5) scans predetermined printed lines in predetermined order.

8. A passbook or the like handling apparatus according to Claim 7, wherein said scanning control means (1) controls so that said second sensor (5) scans a first nonprinted line detected by said first sensor (5) and lines above and under that line.

9. A passbook or the like handling apparatus according to Claim 8, wherein said scanning control means (1) controls said first sensor (5) in such a manner that:
an uppermost printed line is detected in the first place;
a lowermost printed line is checked in the next place in case that line has been printed;
a central line is checked in case said lowermost line has not been printed;
scanning is performed from a line next to said central line and downward in order in case said central line has been printed; and
scanning is performed from a line next to said uppermost line and downward in order in case said central line has not been printed.

10. A passbook or the like handling apparatus according to Claim 9, wherein:
said passbook or the like (6) includes 24 lines in one page; and
said scanning control means (1) controls said first sensor (5) in such a manner that;
the first line is checked in the first place, and the 12th line is checked in case the first line has been printed;
the 24th line is checked in case the 12th line has been printed;
the 6th line is checked in case the 12th line has not been printed;
the 9th line is checked in case the 6th line has been printed;
the 3rd line is checked in case the 6th line has not been printed;
the 10th line is checked in case the 9th line has been printed;
the 11th line is checked in case the 10th line has been printed;
the 7th line is checked in case the 9th line has not been printed;
the 8th line is checked in case the 7th line has been printed;
the 4th line is checked in case the 3rd line has been printed;
the 5th line is checked in case the 4th line has been printed;
the 2nd line is checked in case the 3rd line has not been printed;
the 18th line is checked in case the 24th line has not been printed;
the 21st line is checked in case the 18th line has been printed;
the 15th line is checked in case the 18th line has not been printed;
the 22nd line is checked in case the 21st line has been printed;
the 23rd line is checked in case the 22nd line has been printed;
the 19th line is checked in case the 21st line has not been printed;
the 20th line is checked in case the 19th line has been printed;
the 16th line is checked in case the 15th line has been printed;
the 17th line is checked in case the 16th line has been printed;
the 13th line is checked in case the 15th line has not been printed; and
the 14th line is checked in case the 13th line has been printed.

11. A passbook or the like handling apparatus according to Claim 1, further comprising:
printing means (3) for printing in said passbook or the like, the printing means (3) being movable in a perpendicular direction and a horizontal direction with respect to printed lines; and
means (1, 7) for positioning said printing means (3) at a first nonprinted line at the head specified by the means (1) for specifying said nonprinted line.

12. A passbook or the like handling apparatus according to Claim 11, wherein said first sensor (5) and said second sensor (5) consist of one sensor (5) movable in a perpendicular direction and a horizontal direction, and this sensor (5) is fitted to said printing means (3).

13. A method of specifying a first nonprinted line, in which contents of following transactions are to be printed, of a passbook or the like (6) in which contents of transactions are printed line by line in order from an upper edge thereof and downward, comprising the steps of:
scanning the passbook or the like (6) in a direction perpendicular to printed lines thereof;
detecting a first nonprinted line in a locus of scanning; and characterised by
scanning in a horizontal direction in the next place so as to confirm whether printing is included in said first nonprinted line.

## Patentansprüche

1. Vorrichtung zum Handhaben eines Kontenhefts oder eines dazu ähnlichen Hefts, in dem die Inhalte von Transaktionen Zeile für Zeile gedruckt werden, und zwar der Reihe nach ausgehend von einem oberen Rand des Hefts nach unten, mit
einem ersten Sensor (5) zum Abtasten eines Kontenhefts oder eines dazu ähnlichen Hefts (6) in einer Richtung senkrecht zu den gedruckten Zeilen, so daß erfaßt wird, ob Gedrucktes davon enthalten ist oder nicht,
gekennzeichnet durch
einen zweiten Sensor (5) zum Abtasten des Kontenhefts oder des dazu ähnlichen Hefts (6) in einer Richtung horizontal zu den gedruckten Zeilen zum Erfassen, ob Gedrucktes davon enthalten ist oder nicht und
Mittel (1) zum Angeben einer ersten nicht gedruckten Zeile, basierend auf dem Ergebnis der Erfassung der ersten und zweiten Sensoren (5).

2. Vorrichtung zum Handhaben eines Kontenhefts oder eines dazu ähnlichen Hefts nach Anspruch 1, weiterhin mit Abtaststeuermitteln (1) zum Verursachen, daß der erste Sensor (5), welcher zuerst das Abtasten durchführt, erfaßt, ob an einem Abtastort Gedrucktes enthalten ist und wobei dann der zweite Sensor (5) zu einer Abtastung veranlaßt wird.

3. Vorrichtung zum Handhaben eines Kontenhefts oder eines dazu ähnlichen Hefts nach Anspruch 2, in der die Abtaststeuermittel (1) eine derartige Steuerung durchführen, daß
der erste Sensor (5) eine Abtastung in der Reihenfolge des Gedruckten, beginnend von der obersten gedruckten Zeile aus durchführt, d.h. in Reihenfolge von oben nach unten des Kontenhefts oder des dazu ähnlichen Hefts und
der zweite Sensor (5) ein Abtasten der ersten nicht gedruckten Zeile durchführt, welche durch den ersten Sensor (5) in einer Druckrichtung erfaßt wird, d.h. in einer Horizontalrichtung.

4. Vorrichtung zum Handhaben eines Kontenhefts oder eines dazu ähnlichen Hefts nach Anspruch 2, in der die Abtaststeuermittel (1) eine derartige Steuerung durchführen, daß
der erste Sensor (5) ein Abtasten in der Reihenfolge des Gedruckten durchführt, ausgehend von der ersten gedruckten Zeile, d.h. in einer Reihenfolge von oben nach unten des Kontenhefts oder des dazu ähnlichen Hefts (6) und
der zweite Sensor (5) ein Abtasten der ersten nicht gedruckten Zeile durchführt, erfaßt von dem ersten Sensor (5) und von Zeilen überhalb und unterhalb dieser Zeile in einer Horizontalrichtung.

5. Vorrichtung zum Handhaben eines Kontenhefts oder eines dazu ähnlichen Hefts nach Anspruch 4, in der die Abtaststeuermittel (1) eine derartige Steuerung durchführen, daß der erste Sensor (5) die Ränder der gedruckten Zeilen abtastet.

6. Vorrichtung zum Handhaben eines Kontenhefts oder eines dazu ähnlichen Hefts nach Anspruch 5, in dem Informationen über das Datum an den Rändern der gedruckten Zeilen gedruckt werden.

7. Vorrichtung zum Handhaben eines Kontenhefts oder eines dazu ähnlichen Hefts nach Anspruch 2, in der die Abtaststeuermittel (1) eine derartige Steuerung durchführen, daß der erste Sensor (5) vorbestimmte gedruckte Zeilen in einer vorbestimmten Ordnung abtastet.

8. Vorrichtung zum Handhaben eines Kontenhefts oder eines dazu ähnlichen Hefts nach Anspruch 7, in der die Abtaststeuermittel (1) eine derartige Steuerung durchführen, daß der zweite Sensor (5) eine erste nicht gedruckte Zeile abtastet, erfaßt von dem ersten Sensor (5) und von Zeilen überhalb und unterhalb dieser Zeile.

9. Vorrichtung zum Handhaben eines Kontenhefts oder eines dazu ähnlichen Hefts nach Anspruch 8, in der die Abtaststeuermittel (1) den ersten Sensor (5) derart steuern, daß
eine am weitesten oben gelegene gedruckte Zeile zuerst erfaßt wird,
eine am weitesten unten liegende gedruckte Zeile anschließend überprüft wird, in dem Fall, daß die Zeile gedruckt wurde,
eine zentrale Zeile überprüft wird, in dem Fall, daß die am weitesten unten liegende Zeile nicht gedruckt wurde,
ein Abtasten durchgeführt wird, ausgehend von einer Zeile, welche am nächsten zu der zentralen Zeile und unterhalb derselben liegt, wenn die zentrale Zeile gedruckt wurde, und
ein Abtasten ausgehend von einer Zeile durchgeführt wird, welche nahe zu der am weitesten oben gelegenen Zeile und eins unterhalb dazu angeordnet ist, wenn die zentrale Zeile nicht gedruckt wurde.

10. Vorrichtung zum Handhaben eines Kontenhefts oder eines dazu ähnlichen Hefts nach Anspruch 9, in der
das Kontenheft oder das dazu ähnliche Heft (6) 24 Zeilen auf einer Seite enthält, und
die Abtaststeuermittel (1) den ersten Sensor (5) derart steuern, daß
die erste Zeile zunächst überprüft wird und die 12. Zeile überprüft wird, wenn die erste Zeile gedruckt ist,
die 24. Zeile überprüft wird, wenn die 12. Zeile gedruckt ist,
die 6. Zeile überprüft wird, wenn die 12. Zeile nicht gedruckt ist,
die 9. Zeile überprüft wird, wenn die 6. Zeile gedruckt ist,
die 3. Zeile überprüft wird, wenn die 6. Zeile nicht gedruckt ist,
die 10. Zeile überprüft wird, wenn die 9. Zeile gedruckt ist,
die 11. Zeile überprüft wird, wenn die 10. Zeile gedruckt ist,
die 7. Zeile überprüft wird, wenn die 9. Zeile nicht gedruckt ist,
die 8. Zeile überprüft wird, wenn die 7. Zeile gedruckt ist,
die 4. Zeile überprüft wird, wenn die 3. Zeile gedruckt ist,
die 5. Zeile überprüft wird, wenn die 4. Zeile gedruckt ist,
die 2. Zeile überprüft wird, wenn die 3. Zeile nicht gedruckt ist,
die 18. Zeile überprüft wird, wenn die 24. Zeile nicht gedruckt ist,
die 21. Zeile überprüft wird, wenn die 18. Zeile gedruckt ist,
die 15. Zeile überprüft wird, wenn die 18. Zeile nicht gedruckt ist,
die 22. Zeile überprüft wird, wenn die 21. Zeile gedruckt ist,
die 23. Zeile überprüft wird, wenn die 22. Zeile gedruckt ist,
die 19. Zeile überprüft wird, wenn die 21. Zeile nicht gedruckt ist,
die 20. Zeile überprüft wird, wenn die 19. Zeile gedruckt ist,
die 16. Zeile überprüft wird, wenn die 15. Zeile gedruckt ist,
die 17. Zeile überprüft wird, wenn die 16. Zeile gedruckt ist,
die 13. Zeile überprüft wird, wenn die 15. Zeile nicht gedruckt ist, und
die 14. Zeile überprüft wird, wenn die 13. Zeile gedruckt ist.

11. Vorrichtung zum Handhaben eines Kontenhefts oder eines dazu ähnlichen Hefts nach Anspruch 1, ferner mit
Druckmitteln (3) zum Drucken in dem Kontenheft oder in dem dazu ähnlichen Heft, wobei die Druckmittel (3) bewegbar in eine bezüglich den gedruckten Zeilen senkrechte und eine horizontale Richtung sind, und
Mitteln (1, 7) zum Positionieren der Druckmittel (3) auf eine erste nicht gedruckte Zeile am Kopf, spezifiziert durch die Mittel (1) zum Spezifizieren der nicht gedruckten Zeile.

12. Vorrichtung zum Handhaben eines Kontenhefts oder eines dazu ähnlichen Hefts nach Anspruch 11, in dem der erste Sensor (4) und der zweite Sensor (5) aus einem Sensor (5) bestehen, welcher in eine senkrechte und eine horizontale Richtung bewegbar sind, wobei dieser Sensor (5) in die Druckmittel (3) eingebaut ist.

13. Verfahren zum Spezifizieren einer ersten nicht gedruckten Zeile eines Kontenhefts oder eines dazu ähnlichen Hefts (6), in dem Inhalte von folgenden Transaktionen zu drucken sind, wobei die Inhalte der zu druckenden Transaktionen Zeile für Zeile geordnet von einer oberen Kante desselben nach unten gedruckt werden, mit den folgenden Schritten:
Abtasten des Kontenhefts oder des dazu ähnlichen Hefts (6) in eine Richtung senkrecht zu den gedruckten Zeilen,
Erfassen einer ersten nicht gedruckten Zeile an einem Abtastort,
gekennzeichnet durch
ein darauffolgendes Abtasten in einer Horizontalrichtung, so daß bestätigt wird, ob Gedrucktes in der ersten nicht gedruckten Zeile enthalten ist.

## Revendications

1. Un appareil de traitement de livre de comptes ou livre semblable pour traiter un livre de comptes ou livre semblable dans lequel les contenus de transactions sont imprimés ligne par ligne en ordre vers le bas à partir du bord supérieur de celui-ci, lequel appareil comprend :
un premier capteur (5) pour balayer un livre de comptes ou livre semblable (6) dans une direction perpendiculaire à ses lignes imprimées, afin de détecter si elles contiennent ou non de l'impression ;
caractérisé en ce qu'il comprend en outre :
un second détecteur (5) pour balayer le livre de comptes ou livre semblable (6) dans la direction horizontale des lignes imprimées afin de détecter si elles contiennent ou non de l'impression ; et
un moyen (1) pour déterminer une première ligne non imprimée d'après le résultat de la détection par lesdits premier et second capteurs (5).

2. Un appareil de traitement de livre de comptes ou livre semblable selon la revendication 1, comprenant en outre un moyen de commande de balayage (1) pour faire réaliser en premier lieu le balayage par ledit premier capteur (5), détecter si de l'impression se trouve sur un lieu de balayage, puis faire réaliser le balayage par le second capteur (5).

3. Un appareil de traitement de livre de comptes ou livre semblable selon la revendication 2, dans lequel ledit moyen de commande de balayage (1) agit de telle manière que :
ledit premier capteur (5) réalise le balayage dans l'ordre de l'impression à partir de la ligne imprimée supérieure, c'est-à-dire en ordre de haut en bas sur le livre de comptes ou livre semblable ; et
ledit second capteur (5) réalise le balayage de la première ligne non imprimée détectée par ledit premier capteur (5) dans la direction d'impression, c'est-à-dire la direction horizontale.

4. Un appareil de traitement de livre de comptes ou livre semblable selon la revendication 2, dans lequel ledit moyen de commande de balayage (1) agit de telle manière que :
ledit premier capteur (5) réalise le balayage dans l'ordre d'impression à partir de la première ligne imprimée, c'est-à-dire dans l'ordre de haut en bas sur le livre de comptes ou livre semblable (6) ; et
ledit second capteur (5) réalise le balayage de la première ligne non imprimée détectée par ledit premier capteur (5), ainsi que des lignes au-dessus et au-dessous de cette ligne, dans la direction horizontale.

5. Un appareil de traitement de livre de comptes ou livre semblable selon la revendication 4, dans lequel ledit moyen de commande de balayage (1) agit de telle manière que le premier capteur (5) balaie les bords desdites lignes imprimées.

6. Un appareil de traitement de livre de comptes ou livre semblable selon la revendication 5, dans lequel les données de date sont imprimées dans les bords desdites lignes imprimées.

7. Un appareil de traitement de livre de comptes ou livre semblable selon la revendication 2, dans lequel ledit moyen de commande de balayage (1) agit de telle manière que ledit premier capteur (5) balaie des lignes imprimées prédéterminées dans un ordre prédéterminé.

8. Un appareil de traitement de livre de comptes ou livre semblable selon la revendication 7, dans lequel ledit moyen de commande de balayage (1) agit de telle manière que ledit second capteur (5) balaie une première ligne non imprimée détectée par ledit premier capteur (5) et les lignes au-dessus et en dessous de cette ligne.

9. Un appareil de traitement de livre de comptes ou livre semblable selon la revendication 8, dans lequel ledit moyen de commande de balayage (1) commande ledit premier capteur (5) de telle manière que :
une ligne imprimée supérieure est détectée en premier lieu ;
une ligne imprimée inférieure est contrôlée en second lieu au cas où cette ligne a été imprimée ;
une ligne centrale est contrôlée au cas où ladite ligne inférieure n'a pas été imprimée ;
le balayage est réalisé à partir de la ligne suivant ladite ligne centrale et en ordre vers le bas au cas où ladite ligne centrale a été imprimée.

10. Un appareil de traitement de livre de comptes ou livre semblable selon la revendication 9, dans lequel :
ledit livre de comptes ou livre semblable (6) comprend 24 lignes par page ; et
ledit moyen de commande de balayage (1) commande ledit premier capteur (5) de telle manière que :
la première ligne est contrôlée en premier lieu, et la douzième ligne est contrôlée au cas où la première ligne a été imprimée ;
la vingt-quatrième ligne est contrôlée au cas où la douzième ligne a été imprimée ;
la sixième ligne est contrôlée au cas où la douzième ligne n'a pas été imprimée ;
la neuvième ligne est contrôlée au cas où la sixième ligne a été imprimée ;
la troisième ligne est contrôlée au cas où la sixième ligne n'a pas été imprimée ;
la dixième ligne est contrôlée au cas où la neuvième ligne a été imprimée ;
la onzième ligne est contrôlée au cas où la dixième ligne a été imprimée ;
la septième ligne est contrôlée au cas où la neuvième ligne n'a pas été imprimée ;
la huitième ligne est contrôlée au cas où la septième ligne a été imprimée ;
la quatrième ligne est contrôlée au cas où la troisième ligne a été imprimée ;
la cinquième ligne est contrôlée au cas où la quatrième ligne a été imprimée ;
la seconde ligne est contrôlée au cas où la troisième ligne n'a pas été imprimée ;
la dix-huitième ligne est contrôlée au cas où la vingt-quatrième ligne n'a pas été imprimée ;
la vingt-et-unième ligne est contrôlée au cas où la dix-huitième ligne a été imprimée ;
la quinzième ligne est contrôlée au cas où la dixhuitième ligne n'a pas été imprimée ;
la vingt-deuxième ligne est contrôlée au cas où la vingt-et-unième ligne a été imprimée ;
la vingt-troisième ligne est contrôlée au cas où la vingt-deuxième ligne a été imprimée ;
la dix-neuvième ligne est contrôlée au cas où la vingt-et-unième ligne n'a pas été imprimée ;
la vingtième ligne est contrôlée au cas où la dixneuvième ligne a été imprimée :
la seizième ligne est contrôlée au cas où la quinzième ligne a été imprimée ;
la dix-septième ligne est contrôlée au cas où la seizième ligne a été imprimée :
la treizième ligne est contrôlée au cas où la quinzième ligne n'a pas été imprimée ; et
la quatorzième ligne est contrôlée au cas où la treizième ligne a été imprimée.

11. Un appareil de traitement de livre de comptes ou livre semblable selon la revendication 1, comprenant en outre :
un moyen d'impression (3) pour imprimer dans ledit livre de comptes ou livre semblable, le moyen d'impression (3) étant mobile dans la direction perpendiculaire et dans la direction horizontale par rapport aux lignes imprimées ; et
un moyen (1, 7) pour positionner ledit moyen d'impression (3) sur une première ligne non imprimée à l'endroit spécifié par le moyen (1) pour déterminer ladite ligne non imprimée.

12. Un appareil de traitement de livre de comptes ou livre semblable selon la revendication 11, dans lequel ledit premier capteur (5) et ledit second capteur (5) consistent en un capteur (5) mobile dans la direction perpendiculaire et la direction horizontale, le capteur (5) étant monté sur ledit moyen d'impression (3).

13. Un procédé pour déterminer une première ligne non imprimée dans laquelle les contenus de transactions suivantes doivent être imprimés, première ligne non imprimée d'un livre de comptes ou livre semblable (6) dans lequel les contenus de transactions sont imprimés ligne par ligne en ordre vers le bas à partir du bord supérieur de celui-ci, comprenant les étapes suivantes :
balayer le livre de comptes ou livre semblable (6) dans une direction perpendiculaire à ses lignes imprimées ;
détecter une première ligne non imprimée en un lieu de balayage ; et caractérisé par
un balayage dans la direction horizontale à l'emplacement suivant de manière à confirmer si de l'impression se trouve dans ladite première ligne non imprimée.
